# EUROPEAN PATENT APPLICATION

(11) **EP 4 729 929 A1**
(43) Date of publication of application: **22.04.2026**
(21) Application number: 24894651.9
(22) Date of filing: 21.11.2024
(51) Int. Cl.: G01N 21/88, G01N 21/94

(54) **FOREIGN SUBSTANCE DETECTION DEVICE FOR RECYCLED PLASTIC MATERIAL**

(30) Priority: 21.11.2023 KR 20230162261
(71) Applicant: LG Chem, Ltd., Seoul 07336 (KR)
(72) Inventor: MOON, Jae Young, Daejeon 34122 (KR); OH, Hyun Taek, Daejeon 34122 (KR); BAE, Sung Hak, Daejeon 34122 (KR); HAN, Jung Jin, Daejeon 34122 (KR); KIM, Do Dam, Daejeon 34122 (KR); YUN, Seok Jin, Daejeon 34122 (KR); HA, Kang Woo, Daejeon 34122 (KR)
(74) Representative: Hoffmann Eitle
(86) International application number: PCT/KR2024/018527
(87) International publication number: WO 2025/110759

(57) **Abstract**

The present disclosure relates to a foreign substance detection device for a recycled plastic material, which may enhance the clarity of a foreign substance contained in a test sample and thus improve the accuracy of foreign substance evaluation by emitting light toward the test sample, in a state in which a reflector is disposed on a bottom surface of a sample holder on which the test sample made of a recycled plastic material is placed.

## Description

### [Technical Field]

The present disclosure claims priority to and the benefit of Korean Patent Application No. 10-2023-0162261, filed with the Korean Intellectual Property Office on November 21, 2023, the entire contents of which are incorporated in the present disclosure.

The present disclosure relates to a foreign substance detection device for a recycled plastic material, which may improve the clarity of a foreign substance contained in a post-consumer recycled (PCR) plastic material, thereby enhancing the accuracy of foreign substance evaluation.

### [Background Art]

In general, to evaluate the quality of a plastic material, a pancake-shaped product is fabricated, and then the size and number of foreign substances contained in the product are detected to assign a foreign substance score. Currently, most evaluations of foreign substances are conducted manually by operators with the naked eye.

Specifically, for a new plastic product, the number of foreign substances is small. Accordingly, a foreign substance score may be assigned by determining the presence of foreign substances in the product with the naked eye and then measuring the size of the foreign substances.

However, a recycled plastic product contains a greater amount of foreign substances than a new plastic product, thereby making inspection with the naked eye infeasible.

In addition, when conducting inspection by obtaining an image of a pancake-shaped recycled plastic, the low clarity of the foreign substances makes it difficult to accurately measure the size of the foreign substances.
Patent Document 1: Korean Patent Application Publication No. 10-2023-0063933 (published on May 10, 2023)

### [Disclosure]

### [Technical Problem]

The present disclosure is proposed to resolve the issues mentioned above. An objective of the present disclosure is to provide a foreign substance detection device for a recycled plastic material, which may enhance the clarity of a foreign substance contained in a test sample and thus improve the accuracy of foreign substance evaluation by emitting light toward the test sample, in a state in which a reflector is disposed on a bottom surface of a sample holder on which the test sample made of a recycled plastic material is placed.

### [Technical Solution]

A foreign substance detection device according to the present disclosure may include: a sample holder on which a test sample is placed; an illumination part configured to emit light toward the test sample on the sample holder; a reflection part provided with a reflector, which is disposed on an opposite side of the illumination part with respect to the sample holder and reflects light emitted from the illumination part toward the test sample; an imaging part configured to capture and obtain an image of the test sample; and an evaluation part configured to determine whether a foreign substance is present in the test sample and the size and number of foreign substances, based on information on the image obtained by the imaging part.

In this case, the sample holder may be configured to transmit light emitted from the illumination part.

In addition, the illumination parts may be disposed to be spaced apart from each other on both sides of the imaging part disposed between the illumination parts.

In addition, the imaging part may be installed to reciprocate integrally with the illumination part along a lengthwise direction on one side of the sample holder and capture an image of the test sample by using a line scan method.

In addition, the foreign substance detection device may further include a prism film interposed between the sample holder and the reflector and configured to concentrate, onto the test sample, the light reflected from the reflector.

In addition, the prism film may include: a first film stacked on an upper surface of the reflector and having a prism structure disposed in a longitudinal direction; and a second film stacked on an upper surface of the first film and having a prism structure disposed in a lateral direction.

In addition, the evaluation part may perform image processing in which a boundary is set along an edge of the foreign substance in the captured image to mark a shape of the foreign substance.

In addition, the brightness (lightness) of the reflector may range from 90 to 100 L, based on a maximum value of 100 L.

In addition, the test sample may be made of recycled plastic.

### [Advantageous Effects]

A foreign substance detection device for a recycled plastic material according to the present disclosure having the configuration as described above may enhance the clarity of a foreign substance contained in a test sample and thus improve the accuracy of foreign substance evaluation by emitting light toward the test sample and reflecting the light by using a reflector, in a state in which the reflector is disposed on a bottom surface of a sample holder on which the test sample made of a recycled plastic material is placed.

In particular, a boundary of the foreign substance may be clearly observed by interposing a prism film between the sample holder and the reflector and setting the brightness of the reflector to an optimal level.

### [Description of Drawings]

FIG. 1 is a perspective view showing an embodiment of a foreign substance detection device for a recycled plastic material according to the present disclosure.
FIG. 2 is a front view of FIG. 1.
FIG. 3 is a perspective view showing a state in which a prism film is interposed between a sample holder and a reflector according to the present disclosure.
FIG. 4 is a front view of FIG. 3.
FIG. 5 is an exploded perspective view showing a structure in which a prism film is stacked on an upper surface of the reflector in FIG. 3.
FIG. 6 shows an image processing result obtained when the prism film is applied according to the present disclosure.
FIG. 7 is a view showing states in which foreign substances 1 and 2 detected through the foreign substance detection device according to the present disclosure are actually measured using a microscope.
FIG. 8 is a view showing states in which image processing is performed on the foreign substance 1 in FIG. 7 by using reflectors of Examples 1 to 4.
FIG. 9 is a view showing states in which image processing is performed on the foreign substance 2 in FIG. 7 by using reflectors of Examples 1 to 4.
FIG. 10 shows a difference in image processing results obtained when the prism film is applied according to the present disclosure.

### [Reference Numeral]

P : Test sample
100 : Foreign substance detection device
110 : Sample holder
120 : Illumination part
130 : Reflection part
131 : Reflector
140 : Imaging part
150 : Prism film
151 : First film
153 : Second film.

### [Best Mode]

Hereinafter, a configuration and operation of specific embodiments of the present disclosure will be described in detail with reference to the accompanying drawings.

Here, it should be noted that, in assigning reference numerals to components in each drawing, the same components are indicated with the same numerals wherever possible, even when they are shown in different drawings.

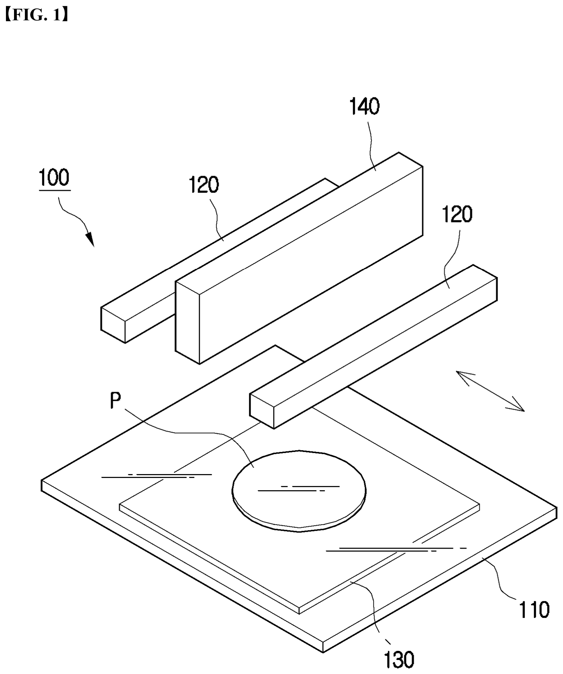

FIG. 1 is a perspective view showing an embodiment of a foreign substance detection device for a recycled plastic material according to the present disclosure.

Referring to FIG. 1, a foreign substance detection device 100 for a recycled plastic material according to a preferred embodiment of the present disclosure may include a sample holder 110, an illumination part 120, a reflection part 130, an imaging part 140, and an evaluation part (not illustrated).

A detailed description of the configuration of the present disclosure is as follows:

First, the sample holder 110 may be formed to have a predetermined area such that a test sample P, which is formed of a recycled plastic material into a pancake shape, may be placed on an upper surface of the sample holder 110.

In this case, the sample holder 110 may be formed of a transparent glass material to transmit light emitted from the illumination part 120, which will be described later. Of course, a material of the sample holder 110 is not limited thereto, and may be variously modified and applied as long as the material may easily transmit light.

In addition, the present disclosure describes the test sample P by way of example in which the test sample P is formed in a pancake shape; however, the test sample P is not limited thereto, and may be modified and applied to have a rectangular or polygonal shape.

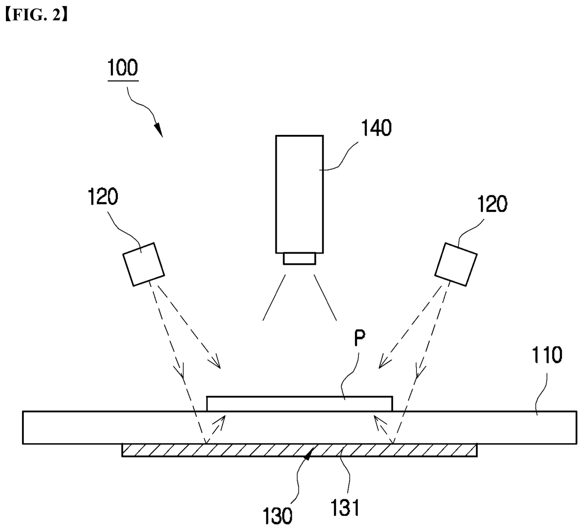

Referring to FIG. 2, the illumination part 120 is disposed at a predetermined height above the sample holder 110 to emit light toward the test sample P.

Specifically, the illumination parts 120 may be symmetrically disposed on both sides of a central portion of the sample holder 110 on which the test sample P is placed, that is, a position where the imaging part 140 described later is disposed. The illumination part 120 may emit light downward toward the test sample P and transmit the light.

The reflection part 130 may be disposed on an opposite side of the illumination part 120 with respect to the sample holder 110, and may reflect the light emitted from the illumination part 120 toward the test sample P.

Specifically, the reflection part 130 may include a reflector 131 disposed on a bottom surface of the sample holder 110. The reflector 131 may reflect the light, which has been emitted downward from the illumination part 120 and has passed through the test sample P, back toward an upper side of the sample holder 110 where the test sample P is placed. Accordingly, when the test sample P is viewed from a planar perspective, a foreign substance present in the test sample P may be clearly marked.

In this case, a degree to which the reflector 131 reflects light may vary depending on brightness (lightness) of the reflector 131. Accordingly, in the present disclosure, it is preferable to use the reflector 131 having brightness of 90 to 100 L, based on a maximum value of 100 L.

That is, if the brightness of the reflector 131 is 90 L or less, reflectivity may decrease. Accordingly, when a foreign substance is measured by the evaluation part described later, it may be difficult to detect a foreign substance, or even when a foreign substance is detected, an error may occur compared with the actual size of the foreign substance.

The imaging part 140 may be installed at a distance above the sample holder 110 and capture an image of the test sample P which has transmitted light by the illumination part 120 and the reflection part 130, thereby obtaining an image in which a foreign substance is marked.

Specifically, the imaging part 140 may be installed to receive power and reciprocate integrally with the illumination part 120 along a lengthwise direction on one side of the sample holder 110. The imaging part 140 and the illumination part 120 may move along the lengthwise direction on one side of the sample holder 110 and capture an image of the test sample P by using a line scan method.

Furthermore, the imaging part 140 and the illumination part 120 may be formed to have a length corresponding to a width of the sample holder 110 on which the test sample P is placed, so as to enable capturing an image by using the line scan method.

In this case, the present disclosure describes an image capturing method by way of example in which with the test sample P remaining fixed, an image is captured by line-scanning the test sample P while the imaging part 140 and the illumination part 120 move. However, conversely, a modified image capturing method may be applied in which with positions of the imaging part 140 and the illumination part 120 remaining fixed, the sample holder 110 moves.

In addition, a component required for the reciprocating movement of the imaging part 140 and the illumination part 120 or of the sample holder 110 is not particularly limited.

The evaluation part may detect the presence of a foreign substance in the test sample P, as well as the size and number of foreign substances, based on information on an image captured by the imaging part 140.

In this case, the evaluation part may perform image processing on a portion, of the captured image, corresponding to a foreign substance contained in the test sample P.

Specifically, the image processing may involve a process of setting a boundary along an edge of the foreign substance in the captured image to accurately mark the shape of the foreign substance. Accordingly, the clarity of the foreign substance present in the test sample P may be improved, and through this process, the efficiency of foreign substance detection may be enhanced.

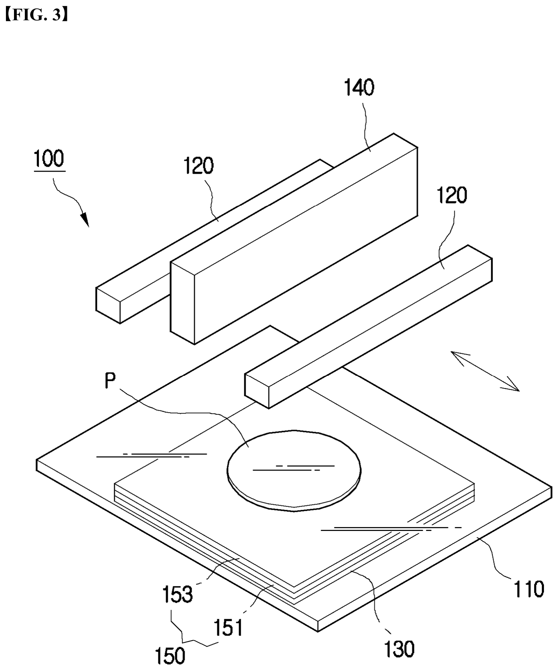

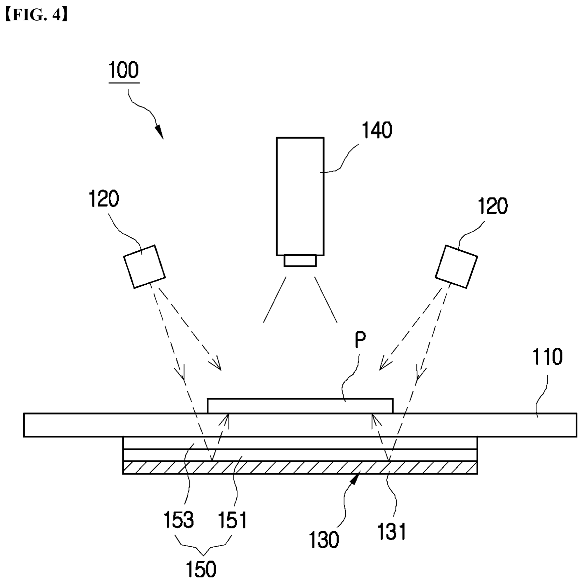

FIG. 3 is a perspective view showing a state in which a prism film is interposed between a sample holder and a reflector according to the present disclosure. FIG. 4 is a front view of FIG. 3.

Referring to FIGS. 3 and 4, a prism film 150 may be interposed between the sample holder 110 and the reflector 131. The prism film 150 may be configured with a micro-prism structure formed on its surface, and may be formed of polycarbonate (PC), polyester (PET), or the like in an embodiment. Accordingly, by concentrating scattered light, which is emitted from the illumination part 120 and then reflected by the reflector 131, onto the test sample P, the directivity of the light may be increased, thereby enhancing the luminance of the light. Consequently, the intensity of the light emitted to the test sample P may be maximized, thereby improving the clarity of the foreign substance present in the test sample P.

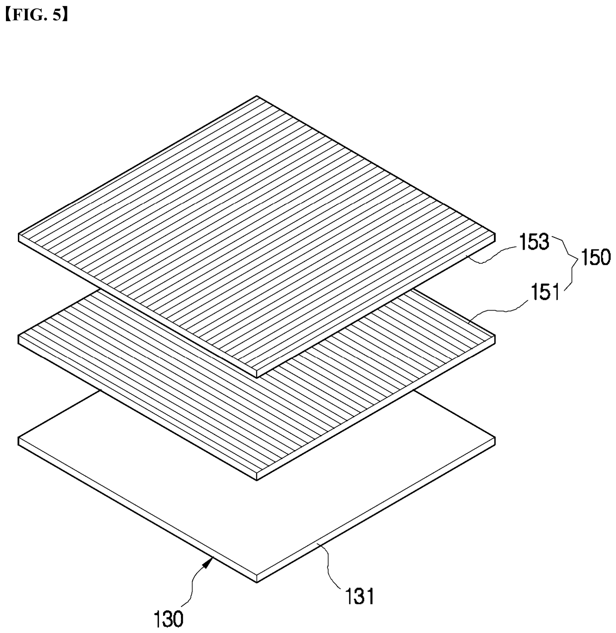

Specifically, the prism film 150 may include: a first film 151, which is stacked on an upper surface of the reflector 131 and has a prism structure disposed in a longitudinal direction; and a second film 153, which is stacked on the upper surface of the first film 151 and has a prism structure disposed in a lateral direction (see FIG. 5).

That is, the light primarily concentrated by the first film 151 is secondarily concentrated again by the second film 153, such that the light reflected upward from the reflector 131 may be concentrated toward the test sample P placed on the sample holder 110, rather than being scattered in various directions.

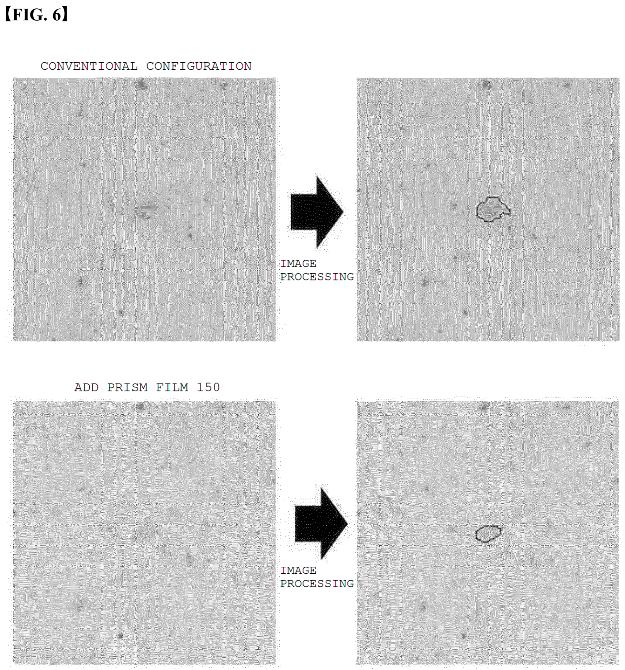

When the prism film 150 having such a structure is applied, the result of image processing is more similar to the result of the actual measurement of a foreign substance, compared to a conventional configuration without the prism film 150, and a detected foreign substance may be observed more clearly, as shown in FIG. 6.

A process of foreign substance detection using the foreign substance detection device 100 for a recycled plastic material according to the present disclosure having the configuration as described above will be described below.

First, the test sample P in a pancake shape is placed on the upper surface of the sample holder 110, and then light having predetermined brightness is emitted toward the test sample P from a pair of the illumination parts 120 disposed at a distance above the sample holder 110 (see FIG. 4).

In this case, the light emitted from the illumination part 120 may be reflected upward by the reflector 131 disposed below the sample holder 110, and may pass through the prism film 150 and be concentrated onto the test sample P. Accordingly, the intensity of the reflected light may be maximized to improve the clarity of the foreign substance in the test sample P.

In addition, the illumination part 120 and the imaging part 140 reciprocate along the lengthwise direction on one side of the sample holder 110 and capture an image of the test sample P placed on the sample holder 110 by using the line scan method.

In addition, the evaluation part determines whether a foreign substance is present in the test sample P, based on information on the image captured by the imaging part 140.

Based on determining, by the evaluation part, that a foreign substance is present in the test sample P, image processing is performed in which a boundary is set along an edge of the foreign substance to accurately mark a shape of the foreign substance.

Subsequently, based on the result of the image processing, the size and number of foreign substances within the test sample P are measured, and a foreign substance score is assigned.

### <Experimental Example 1>

An experiment was conducted to detect and evaluate the presence of a foreign substance as well as the size and number of foreign substances in the test sample P by using the foreign substance detection device 100 for a recycled plastic material of the present disclosure.

Detailed experimental conditions are as follows: the same setting was applied for the imaging part 140 and the illumination part 120 constituting the foreign substance detection device 100; and the brightness (lightness) L of the reflector 131 applied to the reflection part 130 was varied across Examples 1 to 4, as shown in [Table 1] below.

**[Table 1]**

| Reflector 131 | Brightness L |
|---|---|
| Example 1 | 22.1 |
| Example 2 | 6.6 |
| Example 3 | 87.1 |
| Example 4 | 97.1 |

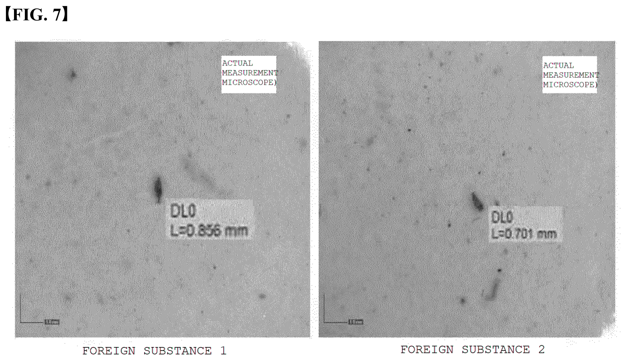

In this case, for example, foreign substances 1 and 2 were detected in the test sample P (see FIG. 7), and the foreign substances were evaluated based on images captured under the condition of the brightness L of the reflector 131 as in Examples 1 to 4 as shown in [Table 1].

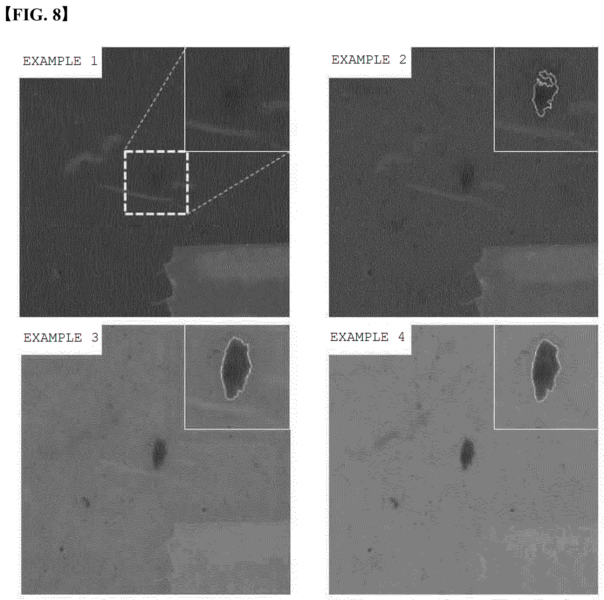

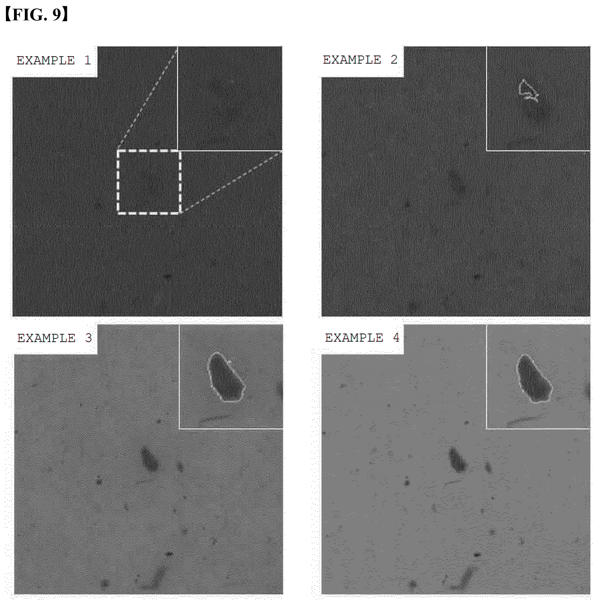

As a result, as shown in FIGS. 8 and 9, the result of processing the captured images of foreign substances 1 and 2 shows that the boundaries of the foreign substances appeared most clearly under the brightness of the reflector 131 in Example 4.

In addition, as shown in [Table 2] below, the actual measured sizes of foreign substances 1 and 2 were compared with the sizes of foreign substances 1 and 2 measured by the evaluation part based on the images from Examples 1 to 4. The comparison result shows that the evaluation result of Example 4 was the closest to the actual measurements, with errors of 0% and 3% for foreign substances 1 and 2, respectively.

**[Table 2]**

| | Actual Measurement (mm) | Example 1 | Example 2 | Example 3 | Example 4 |
|---|---|---|---|---|---|
| Foreign substance 1 | 0.856 | - | 0.625(27%) | 0.869(2%) | 0.857(0%) |
| Foreign substance 2 | 0.701 | - | 0.364(48%) | 0.744(6%) | 0.726(3%) |

### <Experimental Example 2>

An experiment was conducted to detect and evaluate the presence of a foreign substance as well as the actual measured size and number of foreign substances in the test sample P by using the foreign substance detection device 100 for a recycled plastic material of the present disclosure.

Detailed experimental conditions are as follows: the same setting was applied for the imaging part 140 and the illumination part 120 constituting the foreign substance detection device 100; and a sample containing an actual foreign substance with an actual measured size of 0.799 mm was prepared, and the provision of the prism film 150 applied to the reflection part 130 was varied.

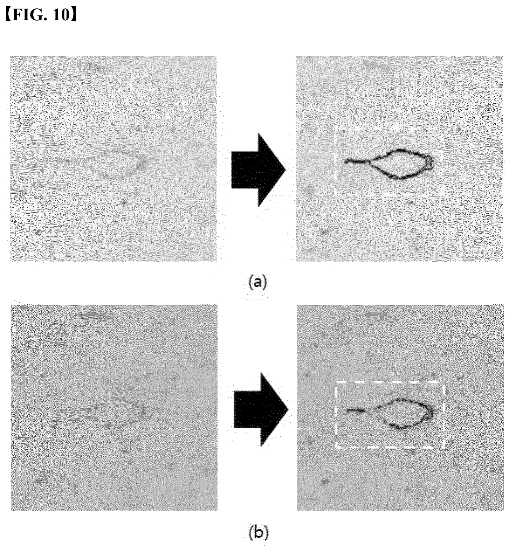

As shown in (a) in FIG. 10, the result of processing the captured image of a foreign substance shows that when a prism film was provided, the presence of a minute foreign substance was detected and the size of the foreign substance was identified as 0.829 mm, thereby enabling easier foreign substance detection.

In contrast, as shown in (b) in FIG. 10, the result of processing the captured image of a foreign substance shows that when a prism film was not provided, the possibility of detecting the presence of a minute foreign substance somewhat decreased, and accordingly, the foreign substance might not be measured.

Consequently, when the prism film 150 is applied to the foreign substance detection device 100 for a recycled plastic material of the present disclosure, an indistinct foreign substance that is difficult to detect with the naked eye may be more easily detected.

Although the present disclosure has been illustrated and described above with reference to specific embodiments, the present disclosure is not limited to the above-described embodiments, and various modifications and changes may be made without departing from the technical spirit of the present disclosure.

## Claims

1. A foreign substance detection device comprising:
a sample holder on which a test sample is placed;
an illumination part configured to emit light toward the test sample on the sample holder;
a reflection part provided with a reflector, which is disposed on an opposite side of the illumination part with respect to the sample holder and reflects light emitted from the illumination part toward the test sample;
an imaging part configured to capture and obtain an image of the test sample; and
an evaluation part configured to determine whether a foreign substance is present in the test sample and the size and number of foreign substances, based on information on the image obtained by the imaging part.

2. The foreign substance detection device of claim 1, wherein the sample holder is configured to transmit light emitted from the illumination part.

3. The foreign substance detection device of claim 1, wherein the illumination parts are disposed to be spaced apart from each other on both sides of the imaging part disposed between the illumination parts.

4. The foreign substance detection device of claim 1 or 3, wherein the imaging part is installed to reciprocate integrally with the illumination part along a lengthwise direction on one side of the sample holder and captures an image of the test sample by using a line scan method.

5. The foreign substance detection device of claim 1, further comprising a prism film interposed between the sample holder and the reflector and configured to concentrate, onto the test sample, the light reflected from the reflector.

6. The foreign substance detection device of claim 5, wherein the prism film comprises:
a first film stacked on an upper surface of the reflector and having a prism structure disposed in a longitudinal direction; and
a second film stacked on an upper surface of the first film and having a prism structure disposed in a lateral direction.

7. The foreign substance detection device of claim 1, wherein the evaluation part performs image processing in which a boundary is set along an edge of the foreign substance in the captured image to mark a shape of the foreign substance.

8. The foreign substance detection device of claim 1, wherein the brightness (lightness) of the reflector ranges from 90 to 100 L, based on a maximum value of 100 L.

9. The foreign substance detection device of claim 1, wherein the test sample is made of recycled plastic.
